# EUROPEAN PATENT APPLICATION

(11) **EP 1 980 931 A2**
(43) Date of publication of application: **15.10.2008**
(21) Application number: 08150590.1
(22) Date of filing: 24.01.2008
(51) Int. Cl.: G06F 1/18

(54) **Electronic apparatus and method to control electronic apparatus**

(30) Priority: 09.04.2007 KR 20070034825
(71) Applicant: Samsung Electronics Co., Ltd., Suwon-si, Gyeonggi-do 442-743 (KR)
(72) Inventor: Oh, Min-a, Seoul (KR); Shin, Sun-soo, Suji-gu, Yongin-si, Gyeonggi-do (KR)
(74) Representative: Grünecker, Kinkeldey, Stockmair & Schwanhäusser Anwaltssozietät

(57) **Abstract**

An electronic apparatus and a control method of the electronic apparatus are provided. A user may perform data communication between the electronic apparatus and an external apparatus connected to the electronic apparatus by moving the external apparatus to move a connector or a dial switch of the electronic apparatus to easily manipulate the electronic apparatus.

## Description

### BACKGROUND OF THE INVENTION

### 1. Field of the Invention

Aspects of the present invention relate to an electronic apparatus, and more particularly, to an electronic apparatus capable of being connected to an external apparatus via a connector, and a function implementation method thereof.

### 2. Description of the Related Art

Electronic apparatuses, such as audio systems, home theaters, computers, portable multimedia players (PMPs) and digital multimedia devices, generally play back audio signals and/or video signals. Such electronic apparatuses include connectors, such as universal serial bus (USB) terminals, into which external apparatuses with USB ports are inserted, and through which data may be transmitted to and received from the external apparatuses.

In other words, electronic apparatuses are connected to external apparatuses via connectors. The electronic apparatuses receive audio data and/or video data stored in the external apparatuses, and play back the received data. External apparatuses, such as an MP3 player, may be directly connected to connectors of electronic apparatuses, such as a docking station, via USB ports, or may be connected to electronic apparatuses by using USB connector cables.

When an external apparatus is connected to a connecting terminal of an electronic apparatus as described above, a user may input desired operation signals to the electronic apparatus in several ways. For example, the user may use a plurality of operation buttons included on the electronic apparatus, or may use a plurality of operation buttons included on a remote controller which is used to input operation signals at a distance from the electronic apparatus.

In other words, a process of operating operation buttons by a user is performed separately after the user connects the electronic apparatus to an external apparatus. However, such operation processes between electronic apparatuses and external apparatuses are complicated, reduce the accessibility of the electronic apparatuses to users, and lessen usage efficiency.

### SUMMARY OF THE INVENTION

Aspects of the present invention relate to an electronic apparatus and an operation method thereof, in which a user can easily operate the electronic apparatus when the electronic apparatus is connected to an external apparatus.

Additional aspects and/or advantages of the invention will be set forth in part in the description which follows and, in part, will be obvious from the description, or may be learned by practice of the invention.

According to an example embodiment of the present invention, an electronic apparatus includes a connector which is connectable to an external apparatus, a switch which is adjustable according to a movement of the connector, and a controller to perform data communication between the external apparatus and the electronic apparatus according to a mode which is selected corresponding to a movement of the switch.

According to an aspect of the present invention, the controller receives data from the external apparatus when a first mode is selected, and the controller transmits data to the external apparatus when a second mode is selected.

According to an aspect of the present invention, the electronic apparatus further includes a first decoder to decode compressed data from the external apparatus, and an output unit to output the decoded data. If the first mode is selected, the controller transmits the compressed data received from the external apparatus through the connector to the first decoder.

According to an aspect of the present invention, the decoder includes a Moving Picture Experts Group-1 audio layer 3 (MP3) decoder.

According to an aspect of the present invention, the electronic apparatus further includes an encoder to compress the data into a predetermined format. If the second mode is selected, the controller transmits the compressed data from the encoder to the external apparatus through the connector.

According to an aspect of the present invention, the encoder includes an MP3 encoder.

According to an aspect of the present invention, the connector is rotatable.

According to an aspect of the present invention, the electronic apparatus further includes a main body having a surface in which the connector is disposed, and the movement of the connector includes a rotational movement about a central axis which is oriented in a normal direction to the surface.

According to an aspect of the present invention, the electronic apparatus further includes a mode display unit to display an indicator corresponding to a selected one of the modes, and the mode display unit is configured to enclose the connector.

According to an aspect of the present invention, the indicator is a color and the mode display unit displays a different type of the colors for each selected mode.

According to an aspect of the present invention, the connector is configured to connect to a main body of the external apparatus.

According to an aspect of the present invention, when the external apparatus is connected to the connector and the connector is not rotated, the controller determines that a first mode is selected.

According to an aspect of the present invention, when the external apparatus is connected to the connector and the connector is rotated, the controller determines that a second mode is selected.

According to an aspect of the present invention, the electronic apparatus functions as a universal serial bus (USB) master, and the external apparatus functions as a USB slave.

According to another example embodiment of the present invention, an electronic apparatus includes a connector which is connectable to an external apparatus, a dial switch to output a mode selection signal according to a rotation of the dial switch, the dial switch being rotatably disposed around the connector; and a controller to perform data communication between the external apparatus and the electronic apparatus according to the mode selection signal output by the dial switch.

According to another aspect of the present invention, when the mode selection signal is a first mode selection signal, the controller receives data from the external apparatus, and when the mode selection signal is a second mode selection signal, the controller transmits data to the external apparatus.

According to another aspect of the present invention, the electronic apparatus further includes a decoder to decode compressed data from the external apparatus, and an output unit to output the decoded data. If the first mode selection signal is input, the controller transmits the compressed data received from the external apparatus through the connector to the decoder.

According to another aspect of the present invention, the decoder includes a Moving Picture Experts Group-1 audio layer 3 (MP3) decoder.

According to another aspect of the present invention, the electronic apparatus may further includes an encoder to compress the data into a predetermined format. If the second mode selection signal is input, the controller transmits the data compressed by the encoder to the external apparatus through the connector.

According to another aspect of the present invention, the encoder includes an MP3 encoder.

According to another aspect of the present invention, the dial switch displays different colors according to the mode selection signal.

According to another aspect of the present invention, the connector is configured to connect to a main body of the external apparatus.

According to another aspect of the present invention, when the external apparatus is connected to the connector and the dial switch is not rotated, the dial switch outputs the first mode selection signal.

According to another aspect of the present invention, when the external apparatus is connected to the connector and the dial switch is rotated, the dial switch outputs the second mode selection signal.

According to another example embodiment of the present invention, a control method of an electronic apparatus including a connector which is selectively connectable to an external apparatus, includes determining whether the external apparatus is connected to the connecter, determining a mode according to a movement of the connector, when it is determined that the external apparatus is connected to the connecter, and performing data communication between the external apparatus and the electronic apparatus according to the determined mode.

According to another aspect of the present invention, the performing of the data communication includes transmitting data from the external apparatus to the electronic apparatus when a first mode is selected, and decoding the transmitted data.

According to another aspect of the present invention, the decoding includes decompressing the transmitted data which is Moving Picture Experts Group-1 audio layer 3 (MP3) data.

According to another aspect of the present invention, the performing of the data communication includes compressing data into a predetermined format when a second mode is selected, and transmitting the compressed data to the external apparatus.

According to another aspect of the present invention, the compressing includes compressing the data into MP3 format.

According to another aspect of the present invention, the connector is disposed on a surface of a main body of the electronic apparatus and is rotatable about a central axis which is oriented in a normal direction to the surface.

According to another aspect of the present invention, the determining of the mode comprises determining whether the connector has been rotated around the central axis.

According to another aspect of the present invention, the method furthers includes displaying different colors on a mode display unit configured to enclose the connector for each mode.

According to another aspect of the present invention, the method further includes configuring the connector to be connectable to a main body of the external apparatus.

According to another aspect of the present invention, when the external apparatus is connected to the connector and the connector is not rotated, the determining of the mode includes determining that the first mode is selected.

According to another aspect of the present invention, when the external apparatus is connected to the connector and the connector is rotated, the determining of the mode includes determining that the second mode is selected.

According to another aspect of the present invention, the electronic apparatus functions as a universal serial bus (USB) master, and the external apparatus functions as a USB slave.

According to another example embodiment of the present invention, a control method of an electronic apparatus including a rotatable dial switch and a connector which is connectable to an external apparatus includes determining whether the external apparatus is connected to the connecter, determining a mode according to a movement of the dial switch, when it is determined that the external apparatus is connected to the connecter, and performing data communication between the external apparatus and the electronic apparatus according to the determined mode.

According to another aspect of the present invention, the performing of the data communication includes transmitting data from the external apparatus to the electronic apparatus when a first mode is selected, and decoding the transmitted data.

According to another aspect of the present invention, the decoding includes decompressing the transmitted data which is Moving Picture Experts Group-1 audio layer 3 (MP3) data.

According to another aspect of the present invention, the performing of the data communication includes compressing the data into a predetermined format when a second mode is selected; and transmitting the compressed data to the external apparatus.

According to another aspect of the present invention, the compressing includes compressing the decoded data into MP3 format.

According to another aspect of the present invention, the dial switch is disposed on a surface of the main body of the electronic apparatus and is rotatable about a central axis which is oriented in a normal direction to the surface.

According to another aspect of the present invention, the method further includes displaying different colors on the dial switch for each mode.

According to another aspect of the present invention, the method further includes configuring the connector to connect to a main body of the external apparatus.

According to another aspect of the present invention, when the external apparatus is connected to the connector and the dial switch is not rotated, the determining of the mode includes determining that a first mode is selected.

According to another aspect of the present invention, when the external apparatus is connected to the connector and the dial switch is rotated, the determining of the mode includes determining that a second mode is selected.

According to another aspect of the present invention, the electronic apparatus functions as a universal serial bus (USB) master, and the external apparatus functions as a USB slave.

According to another example embodiment of the present invention, an electronic apparatus includes a connector which is connectable to an external apparatus, a switch to output a mode selection signal, and a controller to perform data communication between the external apparatus and the electronic apparatus according to the mode selection signal of the switch and a movement of the connector.

According to another aspect of the present invention, the switch includes a first switch to transmit data to the external apparatus, and a second switch to receive data from the external apparatus.

According to another aspect of the present invention, when the connector is rotated and a playback mode is selected using the switch, the switch outputs a playback mode selection signal and the controller receives data stored in the external apparatus through the connector.

According to another aspect of the present invention, when the connector is rotated and a recording mode is selected using the switch, the switch outputs a recording mode selection signal and the controller transmits data stored in a storage medium of the electronic apparatus to the external apparatus through the connector.

According to another example embodiment of the present invention, an electronic apparatus includes a universal serial bus (USB) connector which is connectable to an external apparatus, and a controller to perform data communication between the external apparatus and the electronic apparatus according to a mode which is selected corresponding to a movement of the USB connector.

According to another aspect of the present invention, the controller receives data from the external apparatus when a first mode is selected, and the controller transmits data to the external apparatus when a second mode is selected.

According to another aspect of the present invention, the electronic apparatus further includes a first decoder to decode the data which is coded in an MP3 format, and an output unit to output the decoded data. When the first mode is selected, the controller transmits the data received from the external apparatus through the USB connector to the first decoder.

According to another aspect of the present invention, the electronic apparatus further includes an encoder to compress the data into a predetermined format. When the second mode is selected, the controller transmits the data compressed by the encoder to the external apparatus through the USB connector.

According to another aspect of the present invention, the USB connector may be rotatable.

According to another aspect of the present invention, the electronic apparatus further includes a mode display unit to display an indicator corresponding to a selected one of the modes, and the mode display unit encloses the USB connector.

According to another aspect of the present invention, the indicator is a color and the mode display unit displays a different one of the color for each mode.

According to another example embodiment of the present invention, an electronic apparatus includes a universal serial bus (USB) connector which is connectable to an external apparatus, a dial switch to output a mode selection signal according to a rotation of the dial switch, the dial switch being rotatably disposed around the USB connector, and a controller to perform data communication between the external apparatus and the electronic apparatus according to the mode selection signal output by the dial switch.

According to another aspect of the present invention, the controller receives data from the external apparatus when the mode selection signal is a first mode selection signal, and the controller transmits data to the external apparatus when the mode selection signal is a second mode selection signal.

According to another aspect of the present invention, the electronic apparatus further include a decoder to decode the data which is coded in an MP3 format, and an output unit to output the decoded data. When the first mode selection signal is input, the controller transmits the data received from the external apparatus through the USB connector to the decoder.

According to another aspect of the present invention, the electronic apparatus further includes an encoder to compress the data into a USB format. When the second mode selection signal is input, the controller transmits the data compressed by the encoder to the external apparatus through the USB connector.

According to another aspect of the present invention, the dial switch displays different colors according to the mode selection signal output by the dial switch.

In addition to the example embodiments and aspects as described above, further aspects and embodiments will be apparent by reference to the drawings and by study of the following descriptions.

### BRIEF DESCRIPTION OF THE DRAWINGS

A better understanding of the present invention will become apparent from the following detailed description of example embodiments and the claims when read in connection with the accompanying drawings, all forming a part of the disclosure of this invention. While the following written and illustrated disclosure focuses on disclosing example embodiments of the invention, it should be clearly understood that the same is by way of illustration and example only and that the invention is not limited thereto. The spirit and scope of the present invention are limited only by the terms of the appended claims. The following represents brief descriptions of the drawings, wherein:
FIG. 1 is a perspective view of an exterior of an electronic apparatus and an exterior of an external apparatus according to an example embodiment of the present invention;
FIGs. 2A to 2C are views showing a movement of a first connector of an electronic apparatus according to an example embodiment of the present invention;
FIG. 3 is a block diagram of an audio device and an MP3 player, according to an embodiment of the present invention;
FIG. 4 is a flowchart explaining a method of operating an audio device, according to an embodiment of the present invention;
FIGs. 5A and 5B are views of situations in which the electronic apparatus shown in FIG. 1 is operated in a playback mode and a recording mode, respectively;
FIG. 6 is a view showing a situation in which the electronic apparatus and the external apparatus shown in FIG. 1 are connected via a USB cable;
FIGs. 7A and 7B are views showing a movement of a mode display unit of the electronic apparatus according to another embodiment of the present invention;
FIG. 8 is a block diagram of an audio device and an MP3 player, according to another embodiment of the present invention; and
FIGs. 9 and 10 are views regarding a method of selecting a mode of an electronic apparatus according to another embodiment of the present invention.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

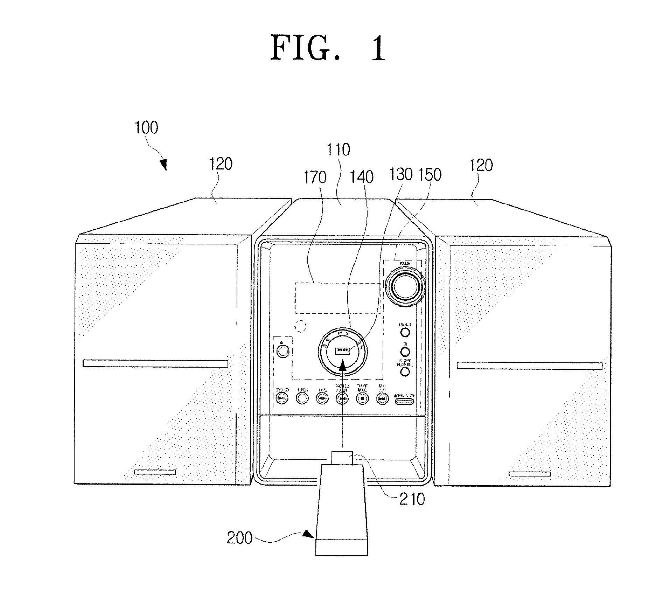

FIG. 1 is a perspective view of an exterior of an electronic apparatus 100 and an exterior of an external apparatus 200 according to an example embodiment of the present invention. According to an aspect of the present invention, the electronic apparatus 100 is an audio device, such as a mini-system, and the external apparatus 200 is a moving picture experts group-1 (MPEG-1) audio layer 3 (MP3) player. However, it is understood that the electronic apparatus 100 and external apparatus 200 are not limited to these embodiments, and may instead be many different kinds of electronic and external devices, such as, for example, a portable multimedia player (PMP), a laptop, etc.

In FIG. 1, the electronic apparatus 100 includes a main body 110 including various components to perform functions, and at least one speaker 120 which outputs an audio signal. Additionally, the exterior of the main body 110 includes a first connector 130 which is selectively connected to the external apparatus 200, a mode display unit 140 which displays each mode of the electronic apparatus 100, an operator 150 which receives a user command, and a main display unit 170 which displays text or the like.

The first connector 130, as a terminal to connect the external apparatus 200 to the electronic apparatus 100, may be disposed on a central front surface of the main body 110 of the electronic apparatus 100, taking into consideration the need for accessibility to users. However, the position of the first connector 130 is not necessarily limited thereto, and may be in any position on the main body 110 of the electronic apparatus 100, such as, for example, a top surface or a side surface of the main body 110.

The first connector 130 acts as a communication interface to perform data communication with the external apparatus 200. Furthermore, the first connector 130 is movable, and therefore also acts as a user interface to receive a user command.

Specifically, the first connector 130 may rotate about a central axis pointing in a normal direction from a surface of the main body 110 on which the first connector 130 is disposed. Additionally, the first connector 130 may rotate in other ways, or may move in non-rotational ways, such as shifting up, down, left, right, etc. Accordingly, when a user connects the external apparatus 200 to the first connector 130 and rotates the external apparatus 200 at a predetermined angle in a specific direction, a controller (not shown) of the electronic apparatus 100 determines that a specific user command is input. The function of the first connector 130 of the electronic apparatus 100 will be described later together with the description of the external apparatus 200.

The mode display unit 140 displays words and/or symbols corresponding to a mode of the electronic apparatus 100. The mode display unit 140 may be implemented in a form of a ring enclosing the first connector 130, or may be implemented in a non-ring shape, such as a square, a triangle, etc. The mode display unit 140 displays an indicator, such as a color, a symbol, a word, etc., corresponding to a selected mode among various modes of the electronic apparatus 100, such as, for example, a "connection mode" indicating whether to connect and/or disconnect the external apparatus 200 to the electronic apparatus 100, a "playback mode" to play back data stored in the external apparatus 200, and a "recording mode" to record data stored in a storage medium of the electronic apparatus 100 in the external apparatus 200. The indicators corresponding to the various modes displayed on the mode display unit 140 may be spaced apart from each other at a predetermined distance, may be superimposed over each other, or may be otherwise configured. Additionally, when the first connector 130 points to a specific mode displayed on the mode display unit 140, the electronic apparatus 100 performs a function corresponding to the specific mode. The mode display unit 140 may include a light emitting element, and accordingly each mode may be displayed using different colors. Accordingly, the mode display unit 140 may be implemented as a liquid crystal display (LCD). However, the mode display unit 140 is not required to include the light emitting element.

The operator 150 is a user interface to receive user commands, and may be disposed on the front surface of the main body 110 of the electronic apparatus 100, or may be disposed elsewhere on the main body 110. As shown in FIG. 1, the operator 150 includes various operation buttons, such as a power source button, a volume button, a playback/pause button, a tuner button, a change of direction button, a movement button, a stop button, an open/close button, an EQ button, an AUX button, a CD/SYNC/REC/PAUSE button, and/or other buttons.

The main display unit 170 may display text, graphics, or the like so that a user can easily operate the electronic apparatus 100. Specifically, a volume bar may be displayed on the main display unit 170, and the type of storage medium containing an audio signal being played back when the electronic apparatus 100 is operated in playback mode may also be displayed on the main display unit 170.

A main body of the external apparatus 200 may be directly connected to the first connector 130, or may be connected to the electronic apparatus 100 via a cable, such as a USB cable, a wireless device, or other connecting devices known in the art. FIG. 1 shows the external apparatus 200 that can be directly connected to the electronic apparatus 100. As shown in FIG. 1, the external apparatus 200 includes a second connector 210 which protrudes for a predetermined distance from one side surface of the external apparatus 200. Accordingly, the second connector 210 may be directly connected to the first connector 130 of the electronic apparatus 100.

According to an aspect of the present invention, the first and second connectors 130 and 210 are universal serial bus (USB) formatted connectors. The USB connectors 130 and 210 each comprise four pins, which enable signals (for example, an audio signal or a control signal) to be transferred between the electronic apparatus 100 and external apparatus 200. In other words, the control signal as well as the audio signal may be transmitted through the USB connectors 130 and 210, so the controller (not shown) of the electronic apparatus 100 may control the external apparatus 200.

As described above, the first connector 130 of the electronic apparatus 100 is rotatably mounted. Thus, if the external apparatus 200 is rotated when the external apparatus 200 is connected to the first connector 130, the first connector 130 is rotated in a direction and an angle corresponding to the rotation of the external apparatus 200. Accordingly, the first connector 130 receives a user command, in addition to performing the function of permitting the electronic apparatus 100 to be connected to the external apparatus 200.

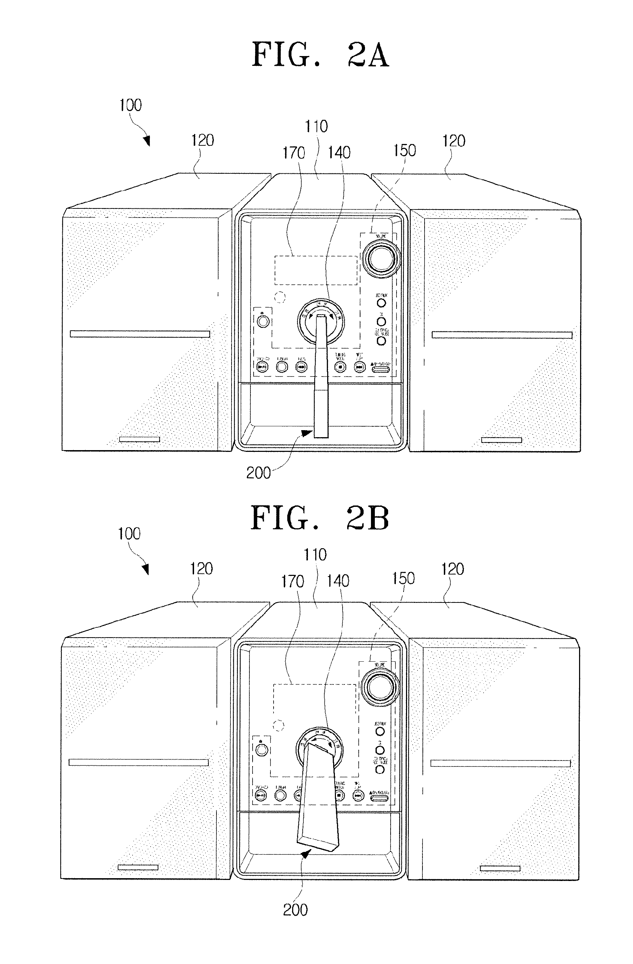

FiGs. 2A to 2C are views showing a movement of the first connector 130 of the electronic apparatus 100 according to an example embodiment of the present invention. In FIG. 2A, if the first connector 130 points to a "connection" mark displayed on the mode display unit 140, the user may detach or attach the external apparatus 200 from/to the first connector 130.

In FIG. 2B, if the user rotates the external apparatus 200 connected to the first connector 130 so that the external apparatus 200 is aligned with a "playback" mark displayed on the mode display unit 140, the first connector 130 of the electronic apparatus 100 rotates a first predetermined angle in tandem with the external apparatus 200, and points to the "playback" mark. Thus, by rotating the external apparatus 200, the user may thereby input a command to enable the audio signal of the external apparatus 200 to be played back in the electronic apparatus 100, using the method described above.

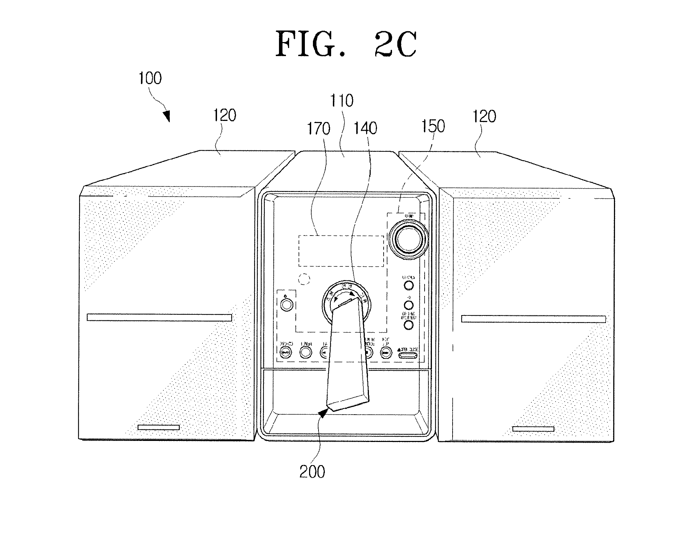

Additionally, as shown in FIG. 2C, if the user rotates the external apparatus 200 connected to the first connector 130 so that the external apparatus 200 is aligned with a "recording" mark displayed on the mode display unit 140, the first connector 130 of the electronic apparatus 100 rotates a second predetermined angle in tandem with the external apparatus 200, and points to the "recording" mark. Thus, by rotating the external apparatus 200, the user may thereby input a command to enable the audio signal stored in the storage medium mounted on the electronic apparatus 100 to be recorded in the external apparatus 200, using the method described above.

As described above, when the external apparatus 200 is initially connected to the first connector 130, the electronic apparatus 100 is operated in the "connection" mode, also known as the first mode. Then, when the first connector 130 points to the playback mark, the electronic apparatus 100 is operated in the " playback" mode, and if the first connector 130 points to the "recording" mark, the electronic apparatus 100 is operated in the " recording" mode. The "playback" mode and the "recording" mode are also known as the second modes. Accordingly, the user can input desired commands into the electronic apparatus 100 in an easy, simple fashion.

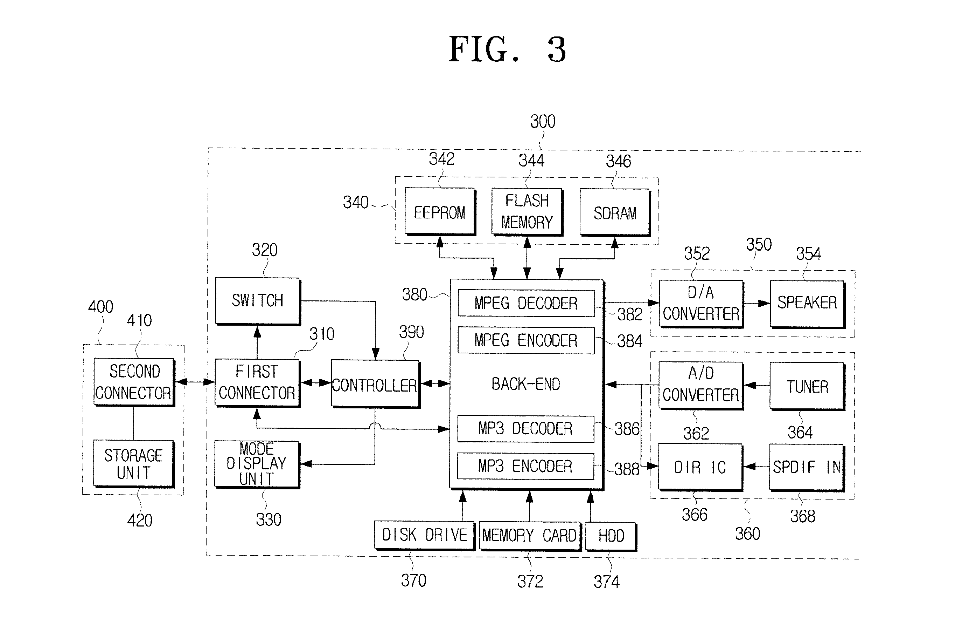

FIG. 3 is a block diagram of an audio device 300 and an MP3 player 400 according to an example embodiment of the present invention. The audio device 300 includes a first connector 310, a switch 320, a mode display unit 330, a back-end 380, a storage unit 340, an output unit 350, a receiver 360, a disk drive 370, a memory card 372, a hard disk drive (HDD) 374, and a controller 390. The first connector 310, the mode display unit 330 and a speaker 354 as shown in FIG. 3 correspond to the first connector 130, the mode display unit 140 and the speaker 120, respectively.

The first connector 310 may be selectively connected to the MP3 player 400 and performs a communication interface function to enable data communication between the MP3 player 400 and the audio device 300. In other words, data received from the MP3 player 400 may be applied to the back-end 380 under the control of the controller 390, or data applied from the back-end 380 may be transmitted to the MP3 player 400.

Additionally, the first connector 310 may be operated to perform a user interface function to receive user commands. The first connector 310 may rotate about its axis, or may move in some other manner, such as, for example, by shifting up, down, left, right, diagonally, or in some combination thereof.

The switch 320 detects whether the first connector 310 moves, and transmits a result of detecting movement to the controller 390. First movement information and second movement information may be stored in a memory of the switch 320. Accordingly, if the result of detecting movement corresponds to the first movement information or the second movement information, the switch 320 determines that movement of the first connector 310 is detected and transmits the detected first movement information or the detected second movement information to the controller 390. The switch 320 accurately detects specific movements and transmits the result of detecting movement to the controller 390, thus preventing the audio device 300 from malfunctioning.

Since the controller 390 determines the mode of the audio device 300 using the result of detecting movement output from the switch 320, the result obtained by the switch 320 is also referred to as a mode selection signal. For example, when the first connector 310 is moved and points to the playback mark, the switch 320 sends a playback mode selection signal to the controller 290. Alternatively, when the first connector 310 is moved and points to the recording mark, the switch 320 sends a recording mode selection signal to the controller 290.

When the mode display unit 330 includes a light emitting element, the mode display unit 330 displays each mode of the audio device 300 using different colors under the control of the controller 390. In this embodiment, the mode display unit 330 displays different colors for the connection mode, playback mode and recording mode, and thus it is easy for a user to manipulate the audio device 300. For example, when the audio device 300 is operated in the connection mode, the mode display unit 330 identifies the connection mode using a green color, when the audio device 300 is operated in the playback mode, the mode display unit 330 identifies the playback mode using a red color, and when the audio device 300 is operated in the recording mode, the mode display unit 330 identifies the recording mode using a blue color. It is understood that the audio device 300 may have modes which are different from the connection mode, the playback mode, and the recording mode, for example, the audio device 300 may have modes corresponding to specific types of playback, e.g., shuffle mode, repeat mode, etc.

The storage unit 340 stores information regarding a program required to control the audio device 300 and the content of the audio device 300. The storage unit 340 includes an electrically erasable and programmable read only memory (EEPROM) 342, a flash memory 344 and a synchronous dynamic random memory (SDRAM) 346. The EEPROM 342 may store various kinds of information, for example, setting information, which is retained even after the power source (not shown) which powers the audio device 300 is turned off. The flash memory 344 may store a program required to control the back-end 380 and multimedia content. The SDRAM 346 may be used as a storage space in which various data is temporarily backed up. The program required to control the audio device 300 may be downloaded by a user, stored in the flash memory 344, and then used, or may be installed in the audio device 300 during manufacturing. Data stored in the EEPROM 342 and flash memory 344 may remain even after the power source is turned off, but data stored in the SDRAM 346 may be deleted when the power source is turned off.

The output unit 350 receives an audio signal transmitted from the back-end 380, converts the received signal to an audible signal, and then outputs the converted signal externally to the at least one speaker 354. The output unit 350 includes a digital-to-analog (D/A) converter 352 and the speaker 354. Specifically, the D/A converter 352 converts a digital audio signal output from the back-end 380 into an analog audio signal, and the speaker 354 converts the analog audio signal into a signal audible to a user and outputs the converted signal.

The receiver 360 includes an analog-to-digital (A/D) converter 362 and a digital audio interface receiver integrated circuit (DIR IC) 366 which respectively receive an analog audio signal and a digital audio signal and transmit the received signals to the back-end 380. The A/D converter 362 receives an analog audio signal from an external apparatus, such as the external apparatus 200 shown in FIGs. 2A-2C, converts the received signal to a digital audio signal, and then transmits the converted signal to the back-end 380. Additionally, the A/D converter 362 controls the signal level and switching operation of signals. A tuner 364 receives radio signals, such as AM and FM radio signals, and transmits the received signals to the A/D converter 362. The DIR IC 366 may convert a digital audio signal input from the external apparatus through a Sony/Philips Digital Interface Format (SPDIF) cable 368, using an audio standard protocol such as I²S, and may transmit the converted signal to the back-end 380. However, the DIR IC 366 may also use various other types of cables 368, and may further implement other types of audio standard protocols.

The disk drive 370 operates a disk, such as a CD, inserted into the audio device 300, and reads data from and/or records data to the disk. The read data may be transferred to the back-end 380 through a radio frequency (RF) amplifier (not shown). For convenience of description, a storage medium in which an audio signal is stored is limited to a disk in the embodiment of the present invention. Accordingly, programs associated with the audio device 300 are stored in the storage unit 340, and the audio device 300 plays back the audio signal stored in the storage medium of the audio device 300, that is, plays back an audio signal stored in the disk. However, it is understood that the audio device 300 may also be used with storage media other than discs, such as flash memories, etc.

The back-end 380 includes a moving picture experts group (MPEG) decoder 382, an MPEG encoder 384, an MP3 decoder 386 and an MP3 encoder 388 in order to decode and/or encode an audio signal input from one of the receiver 360, the MP3 player 400, the disk drive 370, the memory card 372 and the HDD 374. Specifically, an audio signal received from the receiver 360 or the disk drive 370 may be decoded by the MPEG decoder 382, and then output to the output unit 350. Alternatively, the audio signal may be decoded by the MPEG decoder 382 and then encoded into an MP3 file format by the MP3 encoder 388, and the encoded signal may be transferred to the MP3 player 400. Additionally, the MP3 formatted signal transferred to the MP3 player 400 may be decoded by the MP3 decoder 386, and may then be output to the output unit 350.

The controller 390 controls the operations of the audio device 300. According to an aspect of the present invention, the controller 390 communicates with the MP3 player 400 using a master/slave protocol. Specifically, the controller 390 periodically checks whether the MP3 player 400 is connected to the first connector 310 of the audio device 300. When the MP3 player 400 is connected to the first connector 310 of the audio device 300 and the playback mode selection signal is received from the switch 320, the controller 390 determines that the audio device 300 is operating in the playback mode. Accordingly, the controller 390 reads data stored in the MP3 player 400, and transmits the read data to the back-end 380 in order to play back the data stored in the MP3 player 400. The controller 390 may also control the mode display unit 330 so that a color indicating the playback mode is displayed on the mode display unit 330, but is not limited thereto.

Additionally, when the MP3 player 400 is connected to the first connector 310 of the audio device 300 and the recording mode selection signal is received from the switch 320, the controller 390 controls the components of the audio device 300 so that the data stored in the disk or other storage medium is recorded to the MP3 player 400. Additionally, the controller 390 stores the MP3 formatted data output from the back-end 380 in a storage unit 420, such as another flash memory, etc., of the MP3 player 400.

As described above, when the audio device 300 and MP3 player 400 are connected to each other, the components of the audio device 300 may read the data stored in the MP3 player 400 and may process the read data into an appropriate format, or may process the data stored in the disk into an appropriate format and may store the processed data in the storage unit 420 of the MP3 player 400. Accordingly, the audio device 300 may act as a master, and the MP3 player 400 may act as a slave. According to aspects of the present invention, when the audio device 300 is operated in the recording mode, the data stored in the disk may be read, and the read data may be converted into an MP3 file format and transmitted to the MP3 player 400. However, aspects of the present invention are not limited thereto, and data output from the HDD 374, the memory card 372 or the receiver 360 may also be converted into an MP3 file format and transmitted to the MP3 player 400, in addition to the data stored in the disk.

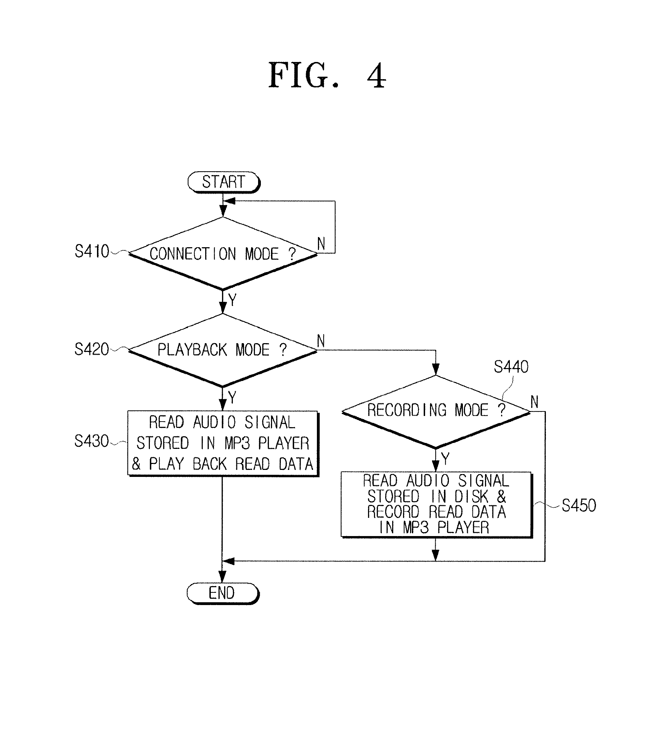

FIG. 4 is a flowchart explaining a method of operating the audio device 300 according to an embodiment of the present invention. First, the controller 390 determines whether the audio device 300 is operated in the connection mode at operation S410. Specifically, a user connects the main body of the MP3 player 400 to the first connector 310 of the audio device 300, and then the controller 390 periodically checks whether the MP3 player 400 is connected to the first connector 310 of the audio device 300. When the MP3 player 400 is connected to the first connector 310 of the audio device 300, the controller 390 determines that the audio device 300 is operated in the connection mode.

When the controller 390 determines that the connection mode is selected at operation S410-Y), the controller 390 then determines whether the audio device 300 is operated in the playback mode at operation S420. Specifically, a user rotates the main body of the MP3 player 400 connected to the first connector 310 of the audio device 300. When the main body of the MP3 player 400 is rotated, the first connector 310 connected to the main body of the MP3 player 400 is also rotated. Accordingly, the switch 320 detects the movement of the first connector 310. When the user rotates the main body of the MP3 player 400 to be aligned with the playback mark, the first connector 310 points to the playback mark, and the switch 320 transmits the playback mode selection signal to the controller 390. Accordingly, the controller 390 determines that the audio device 300 is set in the playback mode.

When the controller 390 determines that the playback mode is selected at operation S420-Y), the controller 390 reads data stored in the MP3 player 400 and controls several components of the audio device 300 so that the read data can be played back in the audio device 300 at operation S430. In other words, the controller 390 reads the data stored in the MP3 player 400 through the first and second connectors 310 and 410, and transmits the read data to the back-end 380. Additionally, the MP3 decoder 386 of the back-end 380 decodes the transferred data and outputs the decoded data to the output unit 350. The D/A converter 352 of the output unit 350 converts the digital audio signal into an analog audio signal. The speaker 354 converts the audio signal into a signal audible to a user and outputs the signal. Accordingly, the audio signal stored in the MP3 player 400 is played back.

Additionally, when the controller 390 determines that the playback mode is not selected at operation S420-N), the controller 390 determines whether the audio device 300 is operated in the recording mode at operation S440. In other words, a user rotates the main body of the MP3 player 400 connected to the first connector 310 of the audio device 300 so that the first connector 310 points to the recording mark. When the first connector 310 points to the recording mark, the switch 320 transmits the recording mode selection signal to the controller 390. Accordingly, the controller 390 determines that the audio device 300 is operated in the recording mode.

When the controller 390 determines that the recording mode is selected at operation S440-Y, the controller 390 reads an audio signal stored in the disk of the audio device 300, and controls the components so that the read data is stored in the MP3 player 400 at operation S450. In other words, the controller 390 operates the disk drive 370 in order to read the audio signal stored in the disk of the audio device 300. When the disk drive 370 reads the audio signal stored in the disk and transmits the read signal to the back-end 380, the MPEG decoder 382 of the back-end 380 decodes the audio signal and transmits the decoded signal to the MP3 encoder 388. The MP3 encoder 388 then converts the decoded audio signal to the MP3 format, and applies the data to the controller 390. The controller 390 generates a control signal to store the MP3 formatted data in the MP3 player 400, and transmits the MP3 formatted data and the control signal to the MP3 player 400 through the first connector 310, so that the audio signal stored in the disk can be recorded in the storage unit 420 of the MP3 player 400.

Accordingly, user commands may be input by checking whether the MP3 player 400 is connected to the first connector 310 or by detecting movement of the first connector 310. Thus, the user can more easily and simply operate the audio device 300.

Although the back-end 380 of the audio device 300 described above includes the MPEG decoder 382, MPEG encoder 384, MP3 decoder 386 and MP3 encoder 388, aspects of the present invention are not limited to such an embodiment. Accordingly, the MP3 decoder or the MP3 encoder may alternatively be disposed only in the MP3 player 400, and not in the audio device 300. In this situation, when the playback mode is selected, the controller 390 may transmit a control signal to the MP3 player 400 commanding the MP3 player 400 to read, decode and transmit an audio signal stored in the storage unit 420 of the MP3 player 400 to the audio device 300. Additionally, when the recording mode is selected, the controller 390 may transmit a control signal to the MP3 player 400 to allow an audio signal to be converted into MP3 formatted data and to be stored together with a recovered audio signal.

Although the controller 390 according to aspects of the present invention described above periodically checks whether the MP3 player 400 is connected to the first connector 310 of the audio device 300, aspects of the present invention are not limited to such a configuration. For example, the switch 320 may also check whether the MP3 player 400 is connected to the first connector 310. When the first connector 310 connected to the MP3 player 400 points to the playback mark, the switch 320 outputs the playback mode selection signal, and when the first connector 310 connected to the MP3 player 400 points to the recording mark, the switch 320 may also output the recording mode selection signal.

As described above, the audio device 300 may be operated in the playback mode, connection mode and recording mode according to aspects of the present invention. However, the modes of the audio device 300 are not limited thereto according to other aspects of the present invention. For example, the audio device 300 may be operated in only playback mode and recording mode without a separate connection mode. Additionally, the switch 320 may check whether the MP3 player 400 is connected to the first connector 310 of the audio device 300 instead of the controller 390 checking whether the MP3 player 400 is connected to the first connector 310, as described above. Furthermore, many other types of modes may also be implemented according to other aspects of the present invention, such as volume modes, types of playback modes including shuffle, repeat, etc., and other modes commonly used with audio and video devices.

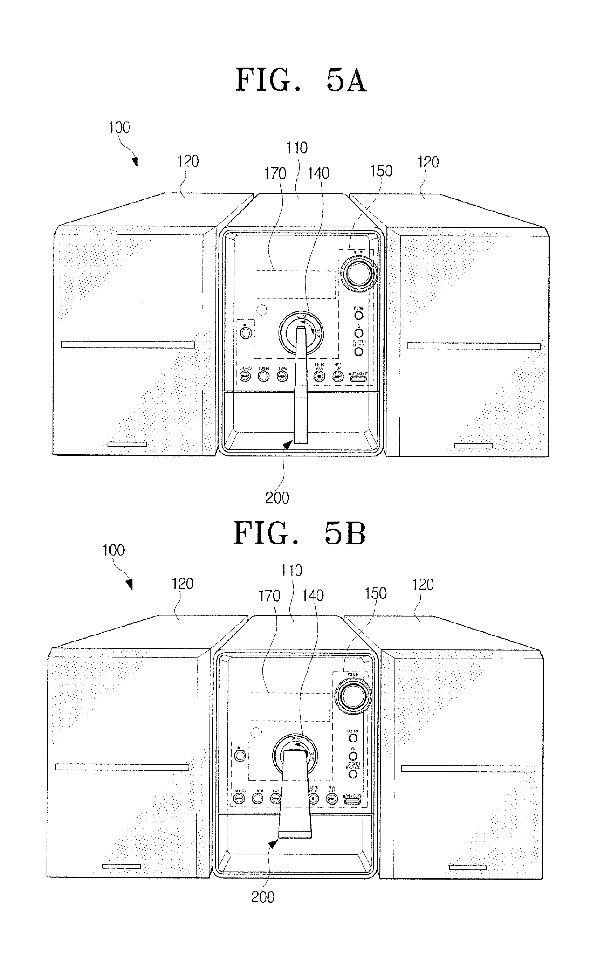

FIGs. 5A and 5B are views illustrating situations in which the electronic apparatus 100 according to an embodiment of the present invention is operated in the playback mode and the recording mode, respectively. Referring to FIG. 5A, when the external apparatus 200 is aligned with the playback mark, that is, when the first connector 130 points to the playback mark, the controller 390 of the electronic apparatus 100 determines that the playback mode is selected. Referring to FIG. 5B, when the first connector 130 points to the recording mark, the controller 390 of the electronic apparatus 100 determines that the recording mode is selected.

Specifically, when the first connector 130 points to the playback mark, the external apparatus 200 can be detached from the electronic apparatus 100. At this time, when there is no movement of the first connector 130 connected to the external apparatus 200, the switch 320 sends the playback mode selection signal to the controller 390. When the first connector 130 connected to the external apparatus 200 is rotated 90° to the right when the external apparatus 200 is aligned with the playback mark, the switch 320 sends the recording mode selection signal to the controller 390. It is understood that the first connector 130 may be configured to rotate at different angles other than 90° to the right, or may be configured to move in different ways than rotating, such as shifting in straight directions, etc.

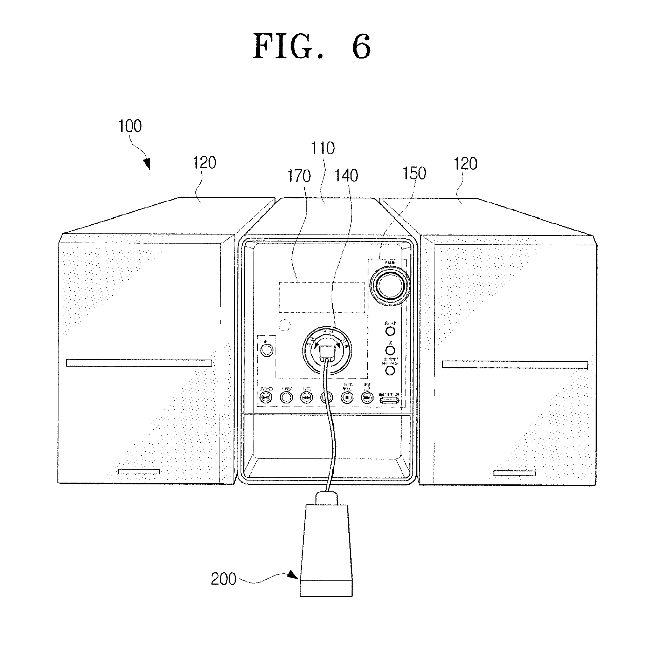

Aspects of the present invention described above provide that the main body of the external apparatus 200 is directly connected to the first connector 130 of the electronic apparatus 100, but other aspects of the present invention are not limited to such a configuration. Referring to FIG. 6, the external apparatus 200 may be connected to the electronic apparatus 100 via a USB cable instead of directly connected to the electronic apparatus 100 as shown in FIGs. 5A and 5B. In this case, the user may input commands to the electronic apparatus 100 by rotating a USB cable terminal connected to the first connector (not shown).

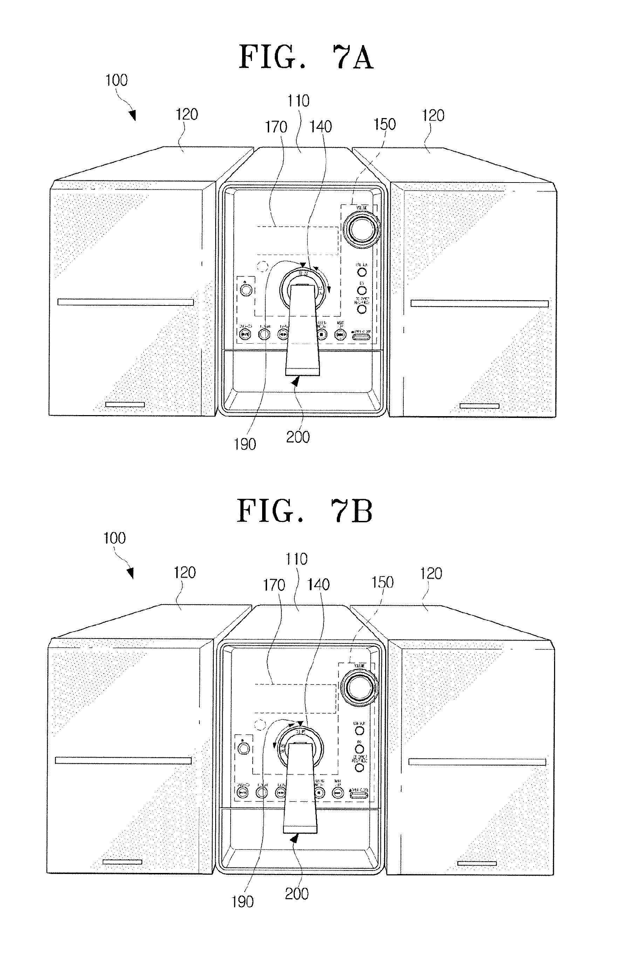

Furthermore, although user commands may be input by rotating the first connector 130 according to aspects of the present invention described above, the input method is not limited thereto according to other aspects of the present invention. Accordingly, user commands may be input by operating the mode display unit 140. FIGS. 7A to 8 are views relating to another embodiment of the present invention.

FIGs. 7A and 7B are views showing a movement of the mode display unit 140 of the electronic apparatus 100 according to another embodiment of the present invention. Hereinafter, in the embodiment shown in FIGs. 7A and 7B, the mode display unit 140 is referred to as a "dial switch 140" because each mode is switched by moving the mode display unit 140. Referring to FIG. 7A, a mode reference point 190 is disposed on the main body 110 of the electronic apparatus 100. The dial switch 140 may protrude a predetermined distance from the main body 110 so that a user can easily rotate the dial switch 140, may be recessed, may have a grooved surface, or may be otherwise configured so that a user can easily rotate the dial switch 140. For example, when a user rotates the dial switch 140 so that a "playback" mark displayed on the dial switch 140 is aligned with the mode reference point 190, the controller determines that the electronic apparatus 100 should be operated in the playback mode. As shown in FIG. 7A, the dial switch 140 enclosing the first connector 130 (FIG. 1) rotates even if the first connector 130 is fixed. As a result, the first connector 130 seems to move based on the movement the dial switch 140.

In the same manner, referring to FIG. 7B, when a user rotates the dial switch 140 so that a "record" mark displayed on the dial switch 140 is aligned with the mode reference point 190, the controller 390 determines that the electronic apparatus 100 should be operated in the recording mode. In this case, the external apparatus 200 should be connected to the first connector 130 when the controller determines the mode of the electronic apparatus 100.

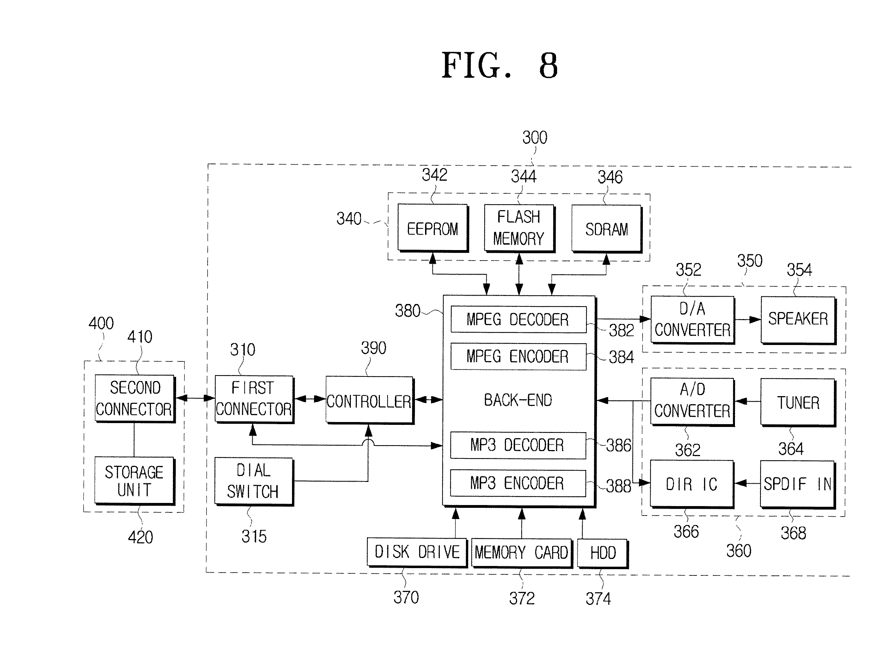

FIG. 8 is a block diagram of the audio device 300 and MP3 player 400 according to another embodiment of the present invention. As described above, a dial switch 315 may rotate about its axis. It is understood that the dial switch 315 is not limited thereto, however, and may be configured to move in straight directions instead of or in addition to a rotational movement about its axis. Additionally, when the "playback" mark displayed on the dial switch 315 is aligned with the mode reference point 190, the dial switch 315 transmits the playback mode selection signal to the controller 390. Also, when the "record" mark displayed on the dial switch 315 is aligned with the mode reference point 190, the dial switch 315 transmits the recording mode selection signal to the controller 390.

The components of the audio device 300 and MP3 player 400 as shown in FIG. 8 have the same functions as those designated by the same reference numerals shown in FIG. 3, except for the dial switch 315 shown in FIG. 8, so detailed descriptions thereof are omitted.

As described above, the process for inputting user commands by moving the first connector 130 or the dial switch 140 was described using the MP3 player and audio device as an example. However, aspects of the present invention are not limited to the MP3 player and the audio device. Accordingly, a camcorder, a mobile phone, a digital camera or the like, which may include the storage unit 420 and may perform data communication with other devices, can be used instead of the MP3 player as an external apparatus. Additionally, a portable multimedia player (PMP), a home theater, a digital multimedia device, a personal computer (PC) or other apparatuses can be used instead of the audio device as the electronic apparatus 100.

Furthermore, data transmitted and received between the electronic apparatus 100 and the external apparatus 200 may include video signals or data signals instead of or in addition to audio signals. According to another aspect of the present invention, when audio signals, video signals, and/or data signals are transmitted from the electronic apparatus 100 to the external apparatus 200, the electronic apparatus 100 can also charge the power source of the external apparatus 200.

Although a user may input commands by rotating the first connector 130 or the dial switch 140, aspects of the present invention are not limited to such an input method. For example, although not illustrated in the drawings, a connector of an MP3 player, that is, an external apparatus 200, may slide in an inserting direction of the external apparatus 200, in a direction perpendicular to the inserting direction, may slide in various directions, or may be controlled to work with a combination thereof, and accordingly user commands can be input. Additionally, the connector of the external apparatus 200 may be twisted in every direction and the position thereof may be changed in the same manner as in a toggle switch to input user commands.

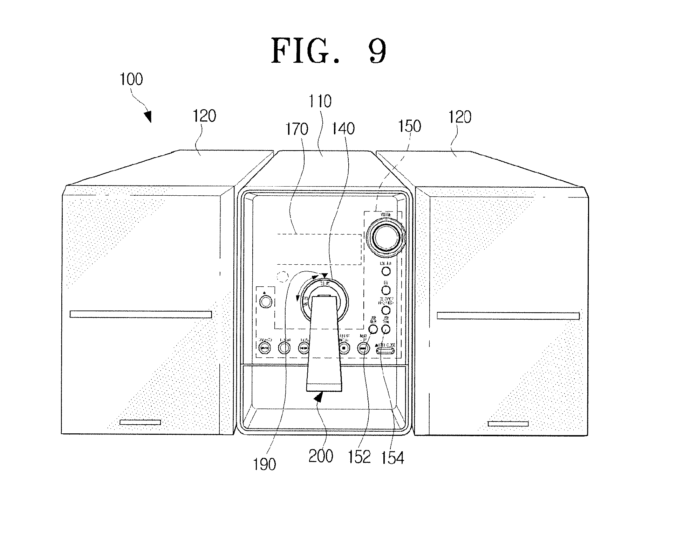

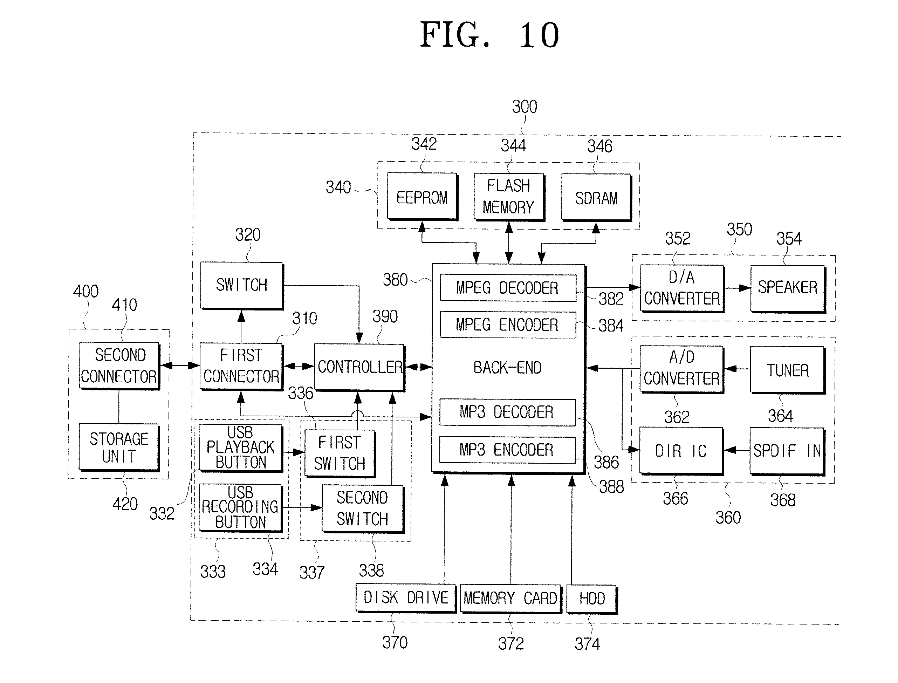

FIGs. 9 and 10 illustrate a method of selecting a mode of the electronic apparatus 100 according to another embodiment of the present invention. In FIG. 9, a user inputs a command to enable data stored in the external apparatus 200 to be played back in the electronic apparatus 100 by connecting the external apparatus 200 to the first connector (not shown), rotating the connector, and then pressing a USB playback button 152. Additionally, when the user connects the external apparatus 200 to the first connector (not shown), rotates the connector, and presses a USB recording button 154, the user enters a command to record data stored in a storage medium of the electronic apparatus 100 in a storage medium of the external apparatus 200.

The USB playback button 152 and the USB recording button 154 respectively correspond to a USB playback button 332 and a USB recording button 334 shown in FIG. 10. Referring to FIG. 10, the USB playback button 332 and the USB recording button 334 are connected to a first switch 336 and a second switch 338, respectively. The first switch 336 outputs the recording mode selection signal to transmit data to the external apparatus 200, and the second switch 338 outputs the playback mode selection signal to transmit data from the external apparatus 200 to the electronic apparatus 100.

Accordingly, when the user presses the USB playback button 332 when the MP3 player 400 is connected to the first connector 310, the first switch 336 outputs the playback mode selection signal to the controller 390. The controller 390 determines that the electronic apparatus 100 (FIG. 9) is operating in the playback mode, and controls the components within the audio device 300 so that data stored in the external apparatus 200 can be read and played back. In the same manner, when the user presses the USB recording button 334 when the MP3 player 400 is connected to the first connector 310, the second switch 338 outputs the recording mode selection signal to the controller 390. The controller 390 determines that the audio device 300 is operating in the recording mode, and controls the components in the audio device 300 so that data stored in a storage medium of the audio device 300 can be stored in a storage medium of the MP3 player.

The components shown in FIG. 10 have the same functions as those components designated by the same reference numerals shown in FIG. 3, except for the USB playback button 332, USB recording button 334, first switch 336 and second switch 338 shown in FIG. 10, so detailed descriptions thereof are omitted. Furthermore, although FIG. 10 only illustrates a USB playback button 332 and USB recording button 334, aspects of the present invention are not limited thereto, and the audio device 300 may include various other kinds of buttons, such as a shuffle button, a repeat button, etc.

According to aspects of the present invention described above, a user may input commands by moving the first connector 130 or the like when the external apparatus 200 is connected to the electric apparatus 100. Thus, the process of manipulating the electronic apparatus 100 is simplified and users can access the electronic apparatus 100 more easily.

While there have been illustrated and described what are considered to be example embodiments of the present invention, it will be understood by those skilled in the art and as technology develops that various changes and modifications, may be made, and equivalents may be substituted for elements thereof without departing from the true scope of the present invention. Many modifications, permutations, additions and sub-combinations may be made to adapt the teachings of the present invention to a particular situation without departing from the scope thereof. For example, a plurality of first connectors 130 may be provided on the main body 110 to perform various functions. Accordingly, it is intended, therefore, that the present invention not be limited to the various example embodiments disclosed, but that the present invention includes all embodiments falling within the scope of the appended claims.

## Claims

1. An electronic apparatus comprising:
a connector which is connectable to an external apparatus;
a switch which is adjustable according to a movement of the connector; and
a controller to perform data communication between the external apparatus and the electronic apparatus according to a mode which is selected corresponding to a movement of the switch.

2. The electronic apparatus according to claim 1, wherein the controller receives data from the external apparatus when a first mode is selected, and the controller transmits data to the external apparatus when a second mode is selected.

3. The electronic apparatus according to claim 2, further comprising:
a first decoder to decode compressed data from the external apparatus; and
an output unit to output decoded data,
wherein the controller transmits the compressed data received from the external apparatus through the connector to the first decoder when the first mode is selected.

4. The electronic apparatus according to claim 3, wherein the decoder comprises a Moving Picture Experts Group-1 audio layer 3 (MP3) decoder.

5. The electronic apparatus according to claim 2, further comprising:
an encoder to compress data into a predetermined format,
wherein the controller transmits the compressed data from the encoder to the external apparatus through the connector when the second mode is selected.

6. The electronic apparatus according to claim 5, wherein the encoder comprises an MP3 encoder.

7. The electronic apparatus according to claim 1, wherein the connector is rotatable.

8. The electronic apparatus according to claim 6, further comprising a main body having a surface on which the connector is disposed, wherein the movement of the connector comprises a rotational movement about a central axis which is oriented in a normal direction to the surface.

9. The electronic apparatus according to claim 1, further comprising a mode display unit to display an indicator corresponding to a selected one of the modes, wherein the mode display unit is configured to enclose the connector.

10. The electronic apparatus according to claim 9, wherein the indicator comprises a color and the mode display unit displays a different type of the colors for each selected mode.

11. The electronic apparatus according to claim 1, wherein the connector is configured to connect to a main body of the external apparatus.

12. The electronic apparatus according to claim 1, wherein the controller determines that a first mode is selected when the external apparatus is connected to the connector and the connector is not rotated, and the controller determines that a second mode is selected when the external apparatus is connected to the connector and the connector is rotated.

13. The electronic apparatus according to claim 1, wherein the controller determines that a first mode is selected when the connector is rotated a first predetermined angle, and the controller determines that a second mode is selected when the connector is rotated a second predetermined angle.

14. The electronic apparatus according to claim 1, wherein the electronic apparatus functions as a universal serial bus (USB) master, and the external apparatus functions as a USB slave.

15. An electronic apparatus comprising:
a connector which is connectable to an external apparatus;
a dial switch to output a mode selection signal according to a rotation of the dial switch, the dial switch being rotatably disposed around the connector; and
a controller to perform data communication between the external apparatus and the electronic apparatus according to the mode selection signal output by the dial switch.

16. The electronic apparatus according to claim 15, wherein the controller receives data from the external apparatus when the dial switch outputs a first mode selection signal, and the controller transmits data to the external apparatus when the dial switch outputs a second mode selection signal.

17. The electronic apparatus according to claim 16, further comprising:
a decoder to decode compressed data from the external apparatus; and
an output unit to output the decoded data,
wherein the controller transmits the compressed data received from the external apparatus through the connector to the decoder when the dial switch outputs the first mode selection signal.

18. The electronic apparatus according to claim 17, wherein the decoder comprises a Moving Picture Experts Group-1 audio layer 3 (MP3) decoder.

19. The electronic apparatus according to claim 16, further comprising:
an encoder to compress data into a predetermined format,
wherein the controller transmits the data compressed by the encoder to the external apparatus through the connector when the second mode selection signal is input.

20. The electronic apparatus according to claim 19, wherein the encoder comprises an MP3 encoder.

21. The electronic apparatus according to claim 15, wherein the dial switch displays different colors according to the mode selection signal.

22. The electronic apparatus according to claim 15, wherein the connector is configured to connect to a main body of the external apparatus.

23. The electronic apparatus according to claim 15, wherein the dial switch outputs a first mode selection signal when the external apparatus is connected to the connector and the dial switch is not rotated.

24. The electronic apparatus according to claim 15, wherein the dial switch outputs a second mode selection signal when the external apparatus is connected to the connector and the dial switch is rotated.

25. A control method of an electronic apparatus comprising a connector which is selectively connectable to an external apparatus, the method comprising:
determining whether the external apparatus is connected to the connecter;
determining a mode according to a movement of the connector, when it is determined that the external apparatus is connected to the connecter; and
performing data communication between the external apparatus and the electronic apparatus according to the determined mode.

26. The method according to claim 25, wherein the performing of the data communication comprises:
transmitting data from the external apparatus to the electronic apparatus when a first mode is selected; and
decoding the transmitted data.

27. The method according to claim 26, wherein the decoding of the transmitted data comprises decompressing the transmitted data which is Moving Picture Experts Group-1 audio layer 3 (MP3) data.

28. The method according to claim 25, wherein the performing of the data communication comprises:
compressing data into a predetermined format when a second mode is selected; and
transmitting the compressed data to the external apparatus.

29. The method according to claim 28, wherein the compressing comprises compressing the data into an MP3 format.

30. The method according to claim 25, wherein the connector is disposed on a surface of a main body of the electronic apparatus and is rotatable about a central axis which is oriented in a normal direction to the surface.

31. The method according to claim 30, wherein the determining of the mode comprises determining whether the connector has been rotated around the central axis.

32. The method according to claim 25, further comprising displaying different colors on a mode display unit configured to enclose the connector for each mode.

33. The method according to claim 25, further comprising configuring the connector to be connectable to a main body of the external apparatus.

34. The method according to claim 25, wherein the determining of the mode comprises determining that a first mode is selected when the external apparatus is connected to the connector and the connector is not rotated.

35. The method according to claim 25, wherein the determining of the mode comprises determining that a second mode is selected when the external apparatus is connected to the connector and the connector is rotated.

36. The method according to claim 25, wherein the electronic apparatus functions as a universal serial bus (USB) master, and the external apparatus functions as a USB slave.

37. A control method of an electronic apparatus comprising a rotatable dial switch and a connector which is connectable to an external apparatus, the method comprising:
determining whether the external apparatus is connected to the connecter;
determining a mode according to a movement of the dial switch, when it is determined that the external apparatus is connected to the connecter; and
performing data communication between the external apparatus and the electronic apparatus according to the determined mode.

38. The method according to claim 37, wherein the performing of the data communication comprises:
transmitting data from the external apparatus to the electronic apparatus when a first mode is selected; and
decoding the transmitted data.

39. The method according to claim 38, wherein the decoding of the transmitted data comprises decompressing the transmitted data which is Moving Picture Experts Group-1 audio layer 3 (MP3) data.

40. The method according to claim 37, wherein the performing of the data communication comprises:
compressing the data into a predetermined format when a second mode is selected; and
transmitting the compressed data to the external apparatus.

41. The method according to claim 40, wherein the compressing comprises compressing the decoded data into an MP3 format.

42. The method according to claim 37, wherein the dial switch is disposed on a surface of a main body of the electronic apparatus and is rotatable about a central axis which is oriented in a normal direction to the surface.

43. The method according to claim 37, further comprising displaying different colors on the dial switch for each mode.

44. The method according to claim 37, further comprising configuring the connector to connect to a main body of the external apparatus.

45. The method according to claim 37, wherein the determining of the mode comprises determining that a first mode is selected when the external apparatus is connected to the connector and the dial switch is not rotated.

46. The method according to claim 37, wherein the determining of the mode comprises determining that a second mode is selected when the external apparatus is connected to the connector and the dial switch is rotated.

47. The method according to claim 37, wherein the electronic apparatus functions as a universal serial bus (USB) master, and the external apparatus functions as a USB slave.

48. An electronic apparatus comprising:
a connector which is connectable to an external apparatus;
a switch to output a mode selection signal; and
a controller connected to the switch to perform data communication between the external apparatus and the electronic apparatus according to the mode selection signal of the switch and a movement of the connector.

49. The electronic apparatus according to claim 48, wherein the switch comprises:
a first switch to transmit data to the external apparatus; and
a second switch to receive data from the external apparatus.

50. The electronic apparatus according to claim 48, wherein the switch outputs a playback mode selection signal and the controller receives data stored in the external apparatus through the connector when the connector is rotated and a playback mode is selected using the switch.

51. The electronic apparatus according to claim 48, wherein the switch outputs a recording mode selection signal and the controller transmits data which is stored in a storage medium of the electronic apparatus to the external apparatus through the connector when the connector is rotated and a recording mode is selected using the switch.

52. An electronic apparatus comprising:
a universal serial bus (USB) connector which is connectable to an external apparatus; and
a controller to perform data communication between the external apparatus and the electronic apparatus according to a mode which is selected corresponding to a movement of the USB connector.

53. The electronic apparatus according to claim 52, wherein the controller receives data from the external apparatus when a first mode is selected, and the controller transmits data to the external apparatus when a second mode is selected.

54. The electronic apparatus according to claim 53, further comprising:
a first decoder to decode data which is coded in an MP3 format; and
an output unit to output the decoded data,
wherein the controller transmits the data received from the external apparatus through the USB connector to the first decoder when the first mode is selected.

55. The electronic apparatus according to claim 53, further comprising:
an encoder to compress data into a predetermined format,
wherein the controller transmits the data compressed by the encoder to the external apparatus through the USB connector when the second mode is selected.

56. The electronic apparatus according to claim 52, wherein the USB connector is rotatable.

57. The electronic apparatus according to claim 52, further comprising a mode display unit to display an indicator corresponding to a selected one of the modes, wherein the mode display unit encloses the USB connector.

58. The electronic apparatus according to claim 57, wherein the indicator comprises a color and the mode display unit displays a different one of the colors for each mode.

59. An electronic apparatus comprising:
a universal serial bus (USB) connector which is connectable to an external apparatus;
a dial switch to output a mode selection signal according to a rotation of the dial switch, the dial switch being rotatably disposed around the USB connector; and
a controller to perform data communication between the external apparatus and the electronic apparatus according to the mode selection signal output by the dial switch.

60. The electronic apparatus according to claim 59, wherein the controller receives data from the external apparatus when the mode selection signal is a first mode selection signal; and
the controller transmits data to the external apparatus when the mode selection signal is a second mode selection signal.

61. The electronic apparatus according to claim 60, further comprising:
a decoder to decode data which is coded in an MP3 format; and
an output unit to output the decoded data,
wherein the controller transmits the data received from the external apparatus through the USB connector to the decoder when the first mode selection signal is output.

62. The electronic apparatus according to claim 60, further comprising:
an encoder to compress data into a USB format,
wherein the controller transmits the data compressed by the encoder to the external apparatus through the USB connector when the second mode selection signal is input.

63. The electronic apparatus according to claim 59, wherein the dial switch displays different colors according to the mode selection signal output by the dial switch.

64. An electronic system, comprising:
an electronic apparatus comprising:
a main body,
a first connector disposed on a surface of the main body which is movable in relation to the main body, and
a controller to perform data communication according to a movement of the first connector; and
an external apparatus comprising:
a main body, and
a second connector disposed on the main body to connect with the first connector so that a movement of the external apparatus moves the first connector.
